# EUROPEAN PATENT SPECIFICATION

(11) **EP 1 807 245 B1**
(45) Date of publication and mention of the grant of the patent: **15.04.2009**
(21) Application number: 05776701.4
(22) Date of filing: 26.08.2005
(51) Int. Cl.: B25C 1/00, B25C 1/08

(54) **CAGE AND OFFSET UPPER PROBE ASSEMBLY FOR FASTENER-DRIVING TOOL**
KÄFIG UND VERSETZTE OBERE FÜHLERANORDNUNG FÜR WERKZEUG ZUM EINTREIBEN VON BEFESTIGUNGSELEMENTEN
ENSEMBLE CAGE ET PALPEUR SUPERIEUR DESAXE POUR OUTIL A ENFONCER DES ELEMENTS DE FIXATION

(30) Priority: 01.09.2004 US 931351
(43) Date of publication of application: 18.07.2007
(73) Proprietor: Illinois Tool Works Inc., Glenview IL 60026 (US)
(72) Inventor: KOLODZIEJ, Norbert K., Park Ridge, IL 60068 (US); GONG, Yongping, Glenview, IL 60026 (US); TUCKER, Kevin M., Chicago, IL 60660 (US); PANASIK, Cheryl L., Elburn, IL 60119 (US)
(74) Representative: Finnie, Peter John
(86) International application number: PCT/IB2005/052810
(87) International publication number: WO 2006/025009

(56) References cited:
- EP-A- 0 560 049
- EP-A- 0 738 565
- US-A- 4 522 162
- US-A- 6 145 724

## Description

### BACKGROUND

The present invention relates generally to fastener-driving tools used to drive fasteners into workpieces, and specifically to combustion-powered fastener-driving tools, also referred to as combustion tools.

Combustion-powered tools are known in the art, and one type of such tools, also known as IMPULSE® brand tools for use in driving fasteners into workpieces, is described in commonly assigned patents to Nikolich U.S. Pat. Re. No. 32,452, and U.S. Pat. Nos. 4,522,162; 4,483,473; 4,483,474; 4,403,722; 5,197,646; 5,263,439 and 6,145,724. Similar combustion- powered nail and staple driving tools are available commercially from ITW-Paslode of Vernon Hills, Illinois under the IMPULSE®, BUILDEX® and PASLODE® brands.

Such tools incorporate a generally pistol-shaped tool housing enclosing a small internal combustion engine. The engine is powered by a canister of pressurized fuel gas, also called a fuel cell. A battery-powered electronic power distribution unit produces a spark for ignition, and a fan located in a combustion chamber provides for both an efficient combustion within the chamber, while facilitating processes ancillary to the combustion operation of the device. Such ancillary processes include: inserting the fuel into the combustion chamber; mixing the fuel and air within the chamber; and removing, or scavenging, combustion by-products. The engine includes a reciprocating piston with an elongated, rigid driver blade disposed within a single cylinder body.

The combustion engine includes a reciprocating piston with an elongated, rigid driver blade disposed within a cylinder body. A valve sleeve is axially reciprocable about the cylinder and, through a linkage, moves to close the combustion chamber when a workpiece contact element (WCE) at the end of the linkage is pressed against a workpiece. This pressing action also triggers a fuel metering valve to introduce a specified volume of fuel into the closed combustion chamber.

Upon the pulling of a trigger switch, which causes the spark to ignite a charge of gas in the combustion chamber of the engine, the combined piston and driver blade is forced downward to impact a positioned fastener and drive it into the workpiece. The piston then returns to its original, or pre-firing position, through differential gas pressures within the cylinder. Fasteners are fed magazine-style into the nosepiece, where they are held in a properly positioned orientation for receiving the impact of the driver blade.

In many types of combustion tools, the WCE includes a pusher rod which reciprocates with the WCE relative to a nosepiece fixed to the tool. As the tool is depressed against the workpiece, causing movement of the WCE relative to the tool nosepiece, an upper end of the pusher rod impacts a cage assembly, which is ultimately connected to the valve sleeve. To reduce impact damage to the cage assembly through repeated use, a rubber-like grommet was placed at the impact point of the pusher rod. Disadvantages of that arrangement included that the grommet deteriorated relatively quickly compared to the useful life of the tool, and that the shock-absorbing function of the grommet resulted in inefficiency through lost motion and extra play in the system.

US 4,522,162 describes a similar tool in which a spring is disposed between the pusher rod and the cage assembly.

Thus, there is a need for a cage and probe assembly for a combustion-powered fastener-driving tool which addresses the drawbacks of the prior art.

### BRIEF SUMMARY

The above-listed needs are met or exceeded by the present cage and probe assembly, designed for use with combustion-powered fastener driving tools. The present cage and probe assembly provides a direct, positive connection between the probe and the cage. As such, the movement of the pusher rod of the WCE is transmitted more efficiently to the valve sleeve. In addition, the probe is made of a rigid material for facilitating the direct transfer of forces. To prevent damage to the probe and cage, the present probe is provided with an axially thickened lobe which withstands repeated impacts from the pusher rod. Thus, the present cage and probe assembly is configured for longterm operation of the type contemplated with typical fastener-driving tools. Another feature is that the lobe is sufficiently offset from an operational axis of the tool so that the operation of the pusher rod is remote from that of the driver blade.

According to a first aspect of the present invention, there is provided a cage and upper probe assembly according to claim 7.

According to a second aspect of the present invention, there is provided a combustion-powered fastener-driving tool, comprising: a driver blade; a nosepiece configured for slidably receiving said driver blade; a workpiece contact element reciprocating relative to said nosepiece; a pusher rod secured to said workpiece contact element for common movement; and a cage and upper probe assembly according to any preceding claim.

### BRIEF DESCRIPTION OF THE SEVERAL VIEWS OF THE DRAWINGS

FIG. 1 is a fragmentary front vertical section of a combustion-powered fastener-driving tool incorporating the present cage and upper probe assembly;
FIG. 2 is an exploded perspective view of the present cage and upper probe assembly with the tool shown fragmentarily; and
FIG. 3 is a top plan view of the present probe.

### DETAILED DESCRIPTION

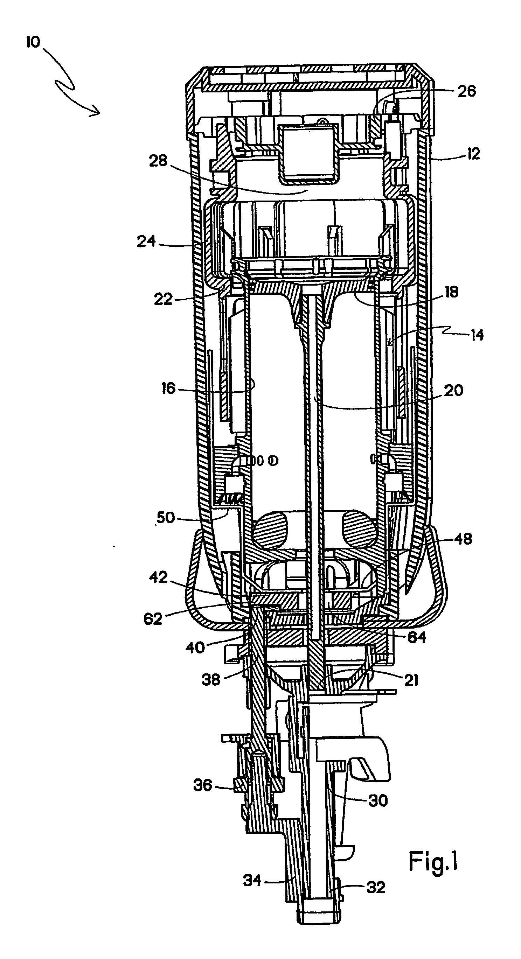

Referring now to FIG. 1, a combustion-powered fastener-driving tool is generally designated 10 and includes a main housing 12 enclosing a power source 14. As is known in the art, the power source 14 includes a cylinder 16 defining a reciprocating pathway for a piston 18 to which is attached a driver blade 20. The driver blade 20 has a tip 21 for engaging fasteners and driving them into a workpiece. A valve sleeve 22 surrounds and axially reciprocates relative to the cylinder 16. An upper portion 24 of the valve sleeve, the piston 18 and a cylinder head 26 combine to define a combustion chamber 28.

A nosepiece 30 is secured to the power source 14 and has a workpiece end 32 opposite the power source and configured for being placed nearest a workpiece into which a fastener is to be driven. A workpiece contact element 34 is positioned at the workpiece end 32 and slidingly reciprocates relative to the nosepiece 30 and is biased by a spring (not shown) to an extended position, seen in FIG. 1. As is known in the art, the workpiece contact element 34 has a threadable depth adjuster 36 for adjusting the depth of penetration of driven fasteners. A pusher rod 38 projects vertically relative to the depth adjuster 36 in a direction generally parallel to an operational axis of the driver blade 20. The pusher rod 38 moves in concert with the workpiece contact element 34.

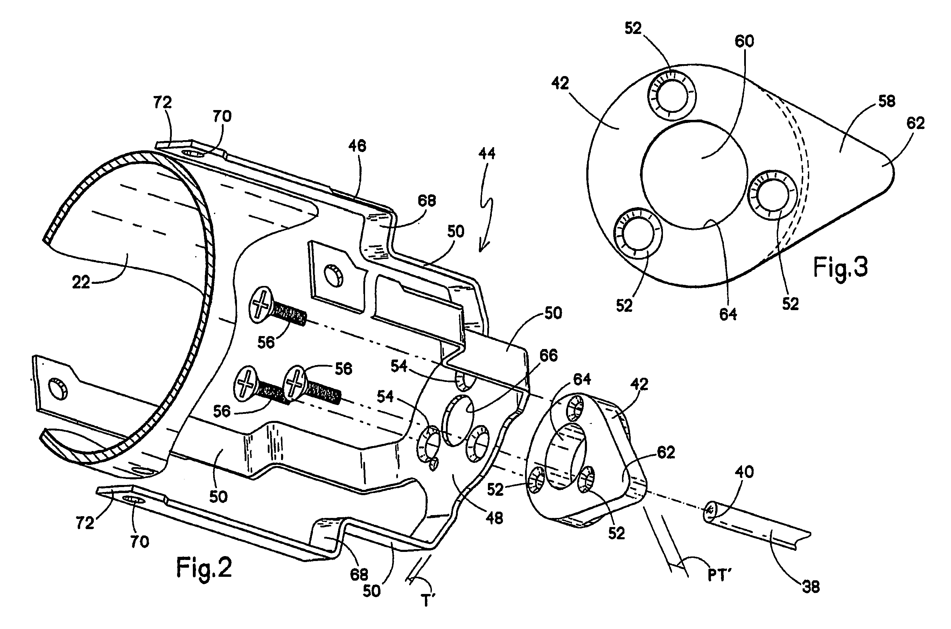

Referring now to FIGs. 1 and 2, an upper or free end 40 of the pusher rod 38 impacts an upper probe 42 of a cage and upper probe assembly, generally designated 44. The assembly 44 includes the upper probe 42 and a cage 46 including a plate-like base 48 and a plurality of generally normally extending arms 50 configured for attachment to the valve sleeve 22.

A feature of the present assembly 44 is that the upper probe 42 is configured for direct attachment to the cage 46. Such attachment is achieved in the preferred embodiment by at least one and preferably three fastener apertures 52 on the upper probe 42 which are in registry with three fastener apertures 54 on the cage base 48, at least the latter preferably being countersunk. Corresponding threaded fasteners 56 secure the probe 42 and the cage 46 together. Alternative fastening technologies are contemplated, including welding, chemical adhesives and other types of fasteners. Regardless of the type of fastening technology, the probe 42 is attached to the cage 46 so that impact of the pusher rod 38 upon the probe is directly transmitted to the cage.

Referring now to FIGs. 2 and 3, the upper probe 42 is generally circular when viewed from above, and has at least one lobe formation 58 projecting radially from a center 60 defined by the probe. The lobe formation 58 is constructed and arranged for receiving and engaging the upper end 40 of the pusher rod 38. In the preferred embodiment, for reducing manufacturing cost and facilitating fit within the tool 10, the lobe formation 58 narrows with increasing distance from said center, or in other words is generally wedge-shaped when viewed from above (FIG. 3). A distal end 62 of the lobe formation 58 is configured for engaging the upper end 40 of the pusher rod 38. The lobe formation 58, and especially the distal end 62 is sufficiently offset from an operational axis of the tool exemplified by the path of the driver blade 20 so that the operation of the pusher rod 38 is remote from that of the driver blade.

The upper probe 42 defines a central aperture 64 configured for accommodating the driver blade 20 (best seen in FIG. 1). Also, the base 48 defines a throughbore 66 in communication with, and preferably in registry with the central aperture 64 for receiving the driver blade 20. To withstand repeated impact from the pusher rod 38 encountered through longterm use of the tool 10, the upper probe 42 is axially thickened relative to the base 48. The relative thickening of the upper probe 42 is significant, and in the order of five times a thickness 'T' of the base. In one preferred embodiment, and for purposes of example only, the base thickness 'T' is approximately 1.524 mm (0.060 inch) and a probe thickness 'PT' is approximately 7.950 mm (0.313 inch). Other relative dimensions are contemplated depending on the application. Also, it is contemplated that the lobe formation 58 has a thickness less than the probe thickness PT.

Referring now to FIG. 2, the cage 46 has four arms 50 projecting from the base 48, each arm having a radially extending shoulder 68 and a distal eyelet 70 located at an eyelet end 72 for attachment to the valve sleeve 22. The shoulders 68 are provided to allow the arms 50 to clear internal components of the tool 10. As is known in the art, the arms 50 are provided in a sufficient length to permit the valve sleeve 22 to reciprocate from an open position shown in FIG. 1 to a closed position in which the combustion chamber 28 is sealed.

It will be seen that the present cage and upper probe assembly 44 addresses the drawbacks of the prior art configurations. Motion from the pusher rod 38 is directly transmitted through the probe 42 to the cage 46 and ultimately to the valve sleeve 22. Also, the probe thickness PT is sufficient to withstand the operational impact of the pusher rod 38 over the operational life of the tool 10.

While a particular embodiment of the present cage and upper probe assembly for a fastener-driving tool has been described herein, it will be appreciated by those skilled in the art that changes and modifications may be made thereto without departing from the invention in its broader aspects and as set forth in the following claims.

## Claims

1. A cage and upper probe assembly (66) for use in a fastener-driving tool (10) comprising a driver blade (20) a nosepiece (30) configured for slidably receiving said driver blade; a workpiece contact element (34) reciprocating relative to said nosepiece and a pusher rod (28) secured to said workpiece contact element for common movement; said cage and upper probe assembly comprising:
a cage (46) including a base (48) and a plurality of arms (50) configured for attachment to a valve sleeve (22);
a probe (42) configured for direct attachment to said cage and having at least one lobe formation (58); and
said probe being attached to said cage so that impact of a pusher rod (38) upon said probe is directly transmitted to said cage,
**characterized in that** said at least one lobe formation (58) is constructed and arranged for receiving an impact form said pusher rod (38).

2. The probe assembly (44) of claim 1 wherein said probe (42) is generally circular when viewed from above, and said at least one lobe (58) projects radially from a center of said probe.

3. The probe assembly (44) of claim 2 wherein said lobe (58) narrows with increasing distance from said center.

4. The probe assembly (44) of claim 2 or claim 3 wherein said lobe (58) is generally wedge-shaped when viewed from above.

5. The probe assembly (44) of any of claims 2 to 4 wherein said probe (42) defines a central aperture (64) configured for accommodating a driver blade (20).

6. The probe assembly (44) of claim 5 wherein said base (48) defines a throughbore (66) in communication with said central aperture (64).

7. The probe assembly (44) of any preceding claim wherein said probe (42) is axially thickened relative to said base (48).

8. The probe assembly (44) of claim 7 wherein said probe (42) has an axial thickness approximately five times a thickness of said base (48).

9. The probe assembly (44) of any preceding claim wherein said cage (46) has four arms (50) projecting from said base (48), each said arm having a radially extending shoulder (68) and a distal eyelet (70) for attachment to a valve sleeve (22).

10. The probe assembly (44) of any preceding claim wherein said probe (42) is constructed and arranged so that said lobe (58) has a distal end (62) and engages the pusher rod (38) at said distal end (40).

11. The probe assembly (44) of any preceding claim wherein said probe (42) and said base (48) have corresponding fastener apertures (52,54) for receiving threaded fasteners (56) used to join said probe to said base.

12. A combustion-powered fastener-driving tool (10), comprising:
a driver blade (20);
a nosepiece (30) configured for slidably receiving said driver blade;
a workpiece contact element (34) reciprocating relative to said nosepiece;
a pusher rod (28) secured to said workpiece contact element for common movement; and
a cage and upper probe assembly (44) according to any preceding claim.

## Patentansprüche

1. Käfig und obere Fühleranordnung (66) für die Verwendung in einem Werkzeug (10) zum Eintreiben von Befestigungselementen mit einem Treiber (20), einer Nasenanordnung (30), die zum gleitenden Aufnehmen des Treibers konfiguriert ist, einem Werkstückkontaktelement (34), das bezüglich der Nasenanordnung hin- und hergeht, und einem Schiebestab (28), der zur gemeinsamen Bewegung an dem Werkstückkontaktelement befestigt ist, wobei der Käfig und die obere Fühleranordnung Folgendes umfassen: einen Käfig (46) mit einer Basis (48) und mehreren Armen (50), die zur Anbringung an einer Ventilhülse (22) konfiguriert sind, einen Fühler (42), der zur direkten Anbringung an dem Käfig konfiguriert ist und mindestens eine Lappenausbildung (58) hat, wobei der Fühler so am Käfig angebracht ist, dass der Aufprall eines Schiebestabs (38) auf den Fühler direkt auf den Käfig übertragen wird, **dadurch gekennzeichnet, dass** die mindestens eine Fühlerausbildung (58) zur Aufnahme eines Aufpralls vom Schiebestab (38) konstruiert und angeordnet ist.

2. Fühleranordnung (44) nach Anspruch 1, wobei der Fühler (42) von oben gesehen allgemein kreisförmig ist und der mindestens eine Lappen (58) radial von einer Mitte des Fühlers vorragt.

3. Fühleranordnung (44) nach Anspruch 2, wobei sich der Lappen (58) mit zunehmendem Abstand von der Mitte verschmälert.

4. Fühleranordnung (44) nach Anspruch 2 oder 3, wobei der Lappen (58) von oben gesehen allgemein keilförmig ist.

5. Fühleranordnung (44) nach einem der Ansprüche 2 bis 4, wobei der Fühler (42) eine mittlere Öffnung (64) definiert, die zur Unterbringung eines Treibers (20) konfiguriert ist.

6. Fühleranordnung (44) nach Anspruch 5, wobei die Basis (48) eine Durchgangsbohrung (66) definiert, die mit der mittleren Öffnung (64) in Verbindung steht.

7. Fühleranordnung (44) nach einem der vorhergehenden Ansprüche, wobei der Fühler (42) im Verhältnis zur Basis (48) axial verdickt ist.

8. Fühleranordnung (44) nach Anspruch 7, wobei die axiale Dicke des Fühlers (42) ungefähr das Fünffache der Dicke der Basis (48) beträgt.

9. Fühleranordnung (44) nach einem der vorhergehenden Ansprüche, wobei der Käfig (46) vier Arme (50) hat, die von der Basis (48) vorragen und jeweils eine sich radial erstreckende Schulter (68) und eine distale Öse (70) für die Anbringung an einer Ventilhülse (22) haben.

10. Fühleranordnung (44) nach einem der vorhergehenden Ansprüche, wobei der Fühler (42) so konstruiert und angeordnet ist, dass der Lappen (58) ein distales Ende (62) hat und den Schiebestab (38) an dem distalen Ende (40) in Eingriff nimmt.

11. Fühleranordnung (44) nach einem der vorhergehenden Ansprüche, wobei der Fühler (42) und die Basis (48) entsprechende Befestigungselementöffnungen (52, 54) zur Aufnahme von Gewindebefestigungselementen (56) haben, die zur Verbindung des Fühlers mit der Basis dienen.

12. Verbrennungskraftbetriebenes Werkzeug (10) zum Eintreiben von Befestigungselementen mit
einem Treiber (20),
einer Nasenanordnung (30), die zum gleitenden Aufnehmen des Treibers konfiguriert ist,
einem Werkstückkontaktelement (34), das bezüglich der Nasenanordnung hin- und hergeht,
einem Schiebestab (28), der zur gemeinsamen Bewegung an dem Werkstückkontaktelement befestigt ist, und
einem Käfig und einer oberen Fühleranordnung (44) nach einem der vorhergehenden Ansprüche.

## Revendications

1. Ensemble cage et palpeur supérieur (66) pour outil de pose d'éléments de fixation (10) comprenant une lame d'entraînement (20) ; une pièce de nez (30) configurée de manière à accueillir de façon coulissante ladite lame d'entraînement ; un élément de contact avec la pièce à usiner (34), décrivant un mouvement alternatif par rapport à ladite pièce de nez et une tige de poussoir (28) fixée audit élément de contact avec la pièce à usiner afin de produire un mouvement commun ; ledit ensemble cage et palpeur supérieur comprenant :
une cage (46) comportant une base (48) et une pluralité de bras (50) configurés pour la fixation à un tiroir de soupape (22) ;
un palpeur (42) configuré pour la fixation directe à ladite cage et comportant au moins un élément en forme de lobe (58) ; et
ledit palpeur étant fixé à ladite cage de manière à ce que l'impact d'une tige de poussoir (38) sur ledit palpeur soit transmis directement à ladite cage,
**caractérisé en ce que** ledit au moins un élément en forme de lobe (58) est construit et agencé de manière à recevoir un impact de ladite tige de poussoir (38).

2. Ensemble palpeur (44) selon la revendication 1, ledit palpeur (42) étant généralement circulaire quand il est vu de dessus, et ledit au moins un lobe (58) s'étendant radialement à partir du centre dudit palpeur.

3. Ensemble palpeur (44) selon la revendication 2, ledit palpeur (58) se rétrécissant au fur et à mesure qu'il s'éloigne dudit centre.

4. Ensemble palpeur (44) selon la revendication 2 ou la revendication 3, ledit lobe (58) étant généralement en forme de coin quand il est vu de dessus.

5. Ensemble palpeur (44) selon l'une quelconque des revendications 2 à 4, ledit palpeur (42) définissant une ouverture centrale (64) configurée de manière à accueillir une lame d'entraînement (20).

6. Ensemble palpeur (44) selon la revendication 5, ladite base (48) définissant un alésage traversant (66) en communication avec ladite ouverture centrale (64).

7. Ensemble palpeur (44) selon l'une quelconque des revendications précédentes, ledit palpeur (42) ayant une épaisseur axiale supérieure par rapport à ladite base (48).

8. Ensemble palpeur (44) selon la revendication 7, ledit palpeur (42) ayant une épaisseur axiale faisant environ cinq fois l'épaisseur de ladite base (48).

9. Ensemble palpeur (44) selon l'une quelconque des revendications précédentes, ladite cage (46) comportant quatre bras (50) dépassant de ladite base (48), chacun desdits bras comportant un épaulement s'étendant dans le sens radial (68) et un oeillet distal (70) pour la fixation à un tiroir de soupape (22).

10. Ensemble palpeur (44) selon l'une quelconque des revendications précédentes, ledit palpeur (42) étant construit et agencé de manière à ce que ledit lobe (58) comporte une extrémité distale (62) et soit en prise avec la tige de poussoir (38) à ladite extrémité distale (40).

11. Ensemble palpeur (44) selon l'une quelconque des revendications précédentes, ledit palpeur (42) et ladite base (48) comportant des trous correspondants pour fixations (52, 54) pour recevoir les fixations filetées (56) utilisées pour assujettir ledit palpeur à ladite base.

12. Outil de pose d'éléments de fixation entraîné par combustion (10), comprenant :
une lame d'entraînement (20) ;
une pièce de nez (30) configurée de manière à accueillir de façon coulissante ladite lame de dispositif d'entraînement ;
un élément de contact avec la pièce à usiner (34) décrivant un mouvement alternatif par rapport à ladite pièce de nez ;
une tige de poussoir (28) fixée à l'élément de contact avec la pièce à usiner pour produire un mouvement commun ; et
un ensemble cage et palpeur supérieur (44) selon l'une quelconque des revendications précédentes.
